Europäisches Patentamt

European Patent Office

Office européen des brevets

(19)

(11) Veröffentlichungsnummer: **0 003 293**

A1

(12) # EUROPÄISCHE PATENTANMELDUNG

(21) Anmeldenummer: **79100084.7**

(22) Anmeldetag: **12.01.79**

(51) Int. Cl.²: **F 24 D 11/02**
**F 24 J 3/04**

(30) Priorität: 25.01.78 DE 2803118

(43) Veröffentlichungstag der Anmeldung:
08.08.79 Patentblatt 79/16

(84) Benannte Vertragsstaaten:
BE CH FR GB IT NL SE

(71) Anmelder: Stiebel Eltron GmbH & Co. KG
Dr.-Stiebel Strasse
D-3450 Holzminden(DE)

(72) Erfinder: Janssen, Harald, Dr.
Hunsrückstrasse 40
D-6233 Kelkheim(DE)

(72) Erfinder: Oelert, Gerhard
Promenade 74
D-6380 Bad Homburg(DE)

(72) Erfinder: Kohnke, Hans Jürgen, Dipl.-Ing.
Riemenschneiderstrasse 20
D-3450 Holzminden(DE)

(74) Vertreter: Gaiser, Hartmut, Dipl.-Ing.
Sulzbacher Strasse 39
D-8500 Nürnberg(DE)

(54) **Heizverfahren mit einer Absorptionswärmepumpenanlage.**

(57) Es wird ein Verfahren zur Beheizung, insbesondere von Gebäuden, mittels einer Absorptionswärmepumpenanlage vorgeschlagen. Die Gesamtwirtschaftlichkeit des Verfahrens ist dadurch verbessert, daß der Absorberdruck mit Hilfe eines Verdichteraggregates (6) von dem Verdampferdruck unabhängig gemacht wird und/oder die zum Absorber (4) rücklaufende arme Lösung in einem Hauptwärmetauscher (8) auf tiefere Temperaturen als es in dem, zwischen dem Absorber (4) und dem Austreiber (2) liegenden Wärmewechsler (7) möglich ist, unterkühlt und der Absorber (4) adiabatisch betrieben wird.

FIG.2

0003293

## Heizverfahren mit einer
## Absorptionswärmepumpenanlage

Die Erfindung betrifft ein Verfahren zur Beheizung mit einer Absorptionswärmepumpenanlage. Es ist insbesondere für die Beheizung von Gebäuden geeignet.

Die thermodynamischen Grundlagen der als Kühl- oder Heizanlagen einsetzbaren Absorptionsanlagen sind seit ca. 70 Jahren bekannt. Gegenüber den stark verbreiteten Kompressionsanlagen gelangten die Absorptionsheizanlagen bisher jedoch nur in bescheidenem Umfang zum praktischen Einsatz, weil sie im Gesamtkosten-Vergleich den Kompressionsanlagen unterlegen und auch hinsichtlich ihrer Baumaße und Anwendungsmöglichkeiten weniger vorteilhaft waren. Ferner werden bei den bisher als Leistungsapparate realisierten Absorptionswärmepumpen in großem Umfang die Stoffpaare Ammoniak/Wasser und Wasser/Lithiumbromid verwendet. Die Verwendung von Ammoniak in Wohnhäusern ist durch Sicherheitsrisiken eingeschränkt. Die höchste Austreibungstemperatur für das Stoffpaar Ammoniak/Wasser liegt bei 160 bis 180°C; darüber treten zu starke Korrosionserscheinungen und Zersetzung auf. Das Stoffpaar Wasser/Lithiumbromid hat den Nachteil, daß die Austreibungstemperatur im Hinblick auf Zersetzung, Salzausscheidung und Korrosion 150°C nicht überschreiten darf. Ferner darf bei Einsatz von Wasser als "Kältemittel" die Verdampfungstemperatur praktisch nicht unter 0°C liegen.

Die begrenzten Anwendungsmöglichkeiten der bisher realisierten Absorptionswärmepumpen führten schon frühzeitig zu ihrer Kombination mit anderen energietechnischen Systemen (W. Niebergall, Absorptionsheizanlagen, Kältetechnik 9 (1957) Nr. 9, S. 238 - 243). Wegen der Anlage- und Betriebskostenprogression bei kleineren Baugrößen sowie wegen des größeren Platzbedarfs, verglichen mit konkurrierenden Heizsystemen wurden Absorptionswärmepumpen zur Beheizung von Einfamilienhäusern bisher nicht bis zur Gebrauchsreife entwickelt (R. Plank, Handbuch der Kältetechnik, Bd. VI/A, Springer-Verlag, Berlin 1969).

Die Aufgabe der vorliegenden Erfindung ist nun die Schaffung eines Verfahrens zur Beheizung, insbesondere von Gebäuden, das in seiner Gesamtwirtschaftlichkeit im Vergleich sowohl mit konventionellen Heizanlagen als auch mit Kompressionswärmepumpen konkurrenzfähig ist. Die Durchführung dieses Verfahrens sollte gegenüber den erprobten Heiztechniken eine Einsparung an Primärenergie ermöglichen.

Es hat sich nun gezeigt, daß sich diese Aufgabe in technisch fortschrittlicher Weise lösen läßt, wenn bei dem Verfahren zur Beheizung von Gebäuden mit einer Absorptionswärmepumpenanlage der Absorberdruck mit Hilfe eines Verdichteraggregates von dem Verdampferdruck unabhängig gemacht wird und/oder die zum Absorber rücklaufende arme Lösung in einem Hauptwärmetauscher auf tiefere Temperaturen, als es in dem, zwischen Absorber und Austreiber liegenden, Wärmewechsler möglich ist, unterkühlt und der Absorber adiabatisch betrieben wird. Vorzugsweise wird als Verdichteraggregat ein Strahlapparat verwendet und bei einem außentemperaturabhängigen, nicht ausreichenden Verdampferdrück der Kältemittelkreislauf abgeschaltet und der Lösungskreislauf als Wärmeträgeranlage genutzt. Im Wärmeträgeranlagenbetrieb kann ferner der Wärmewechsler umgangen und die Wärme ausschließlich über den Hauptwärmetauscher abgegeben werden.

Im Falle der Beheizung des Austreibers mit Öl, Gas oder festen Brennstoffen können die Rauchgase in einem dem Austreiber nachgeschalteten Aggregat mit einem zu erwärmenden Medium gekühlt werden. Das Rauchgas kann beispielsweise zur Verdampfung eines Stromes von flüssigem Kältemittel verwendet werden und das dampfförmige Kältemittel kann als Treibdampfstrom in dem Verdichteraggregat benutzt werden.

Die Rauchgase können jedoch auch direkt gegen Heizungs- oder Brauchwasser gekühlt werden. In diesem Fall wird als Treibdampf für den Strahlapparat enthitzter Kältemitteldampf dem Kondensator entnommen.

Vorzugsweise wird als Lösungspumpe eine Zahnradpumpe und als adiabatischer Absorber ein Rohr mit statischen Mischern verwendet.

Als Arbeitsmedium für das erfindungsgemäße Verfahren eignet sich z.B. das Stoffpaar Difluormonochlormethan/ Tetraäthylenglycoldimethyläther für den sicheren Betrieb in Wohnhäusern. Die thermische Stabilität, geringe Korrosivität und Toxizität dieses Stoffpaares gewährleisten einen dauerhaften und sicheren Einsatz. Hinzu kommt, daß eine große Siedepunktdifferenz zwischen Difluormonochlormethan und Tetraäthylenglycoldimethyläther vorhanden ist, durch die Kocher- bzw. die Austreiberkonstruktion vereinfacht werden kann, weil nicht rektifiziert werden muß.

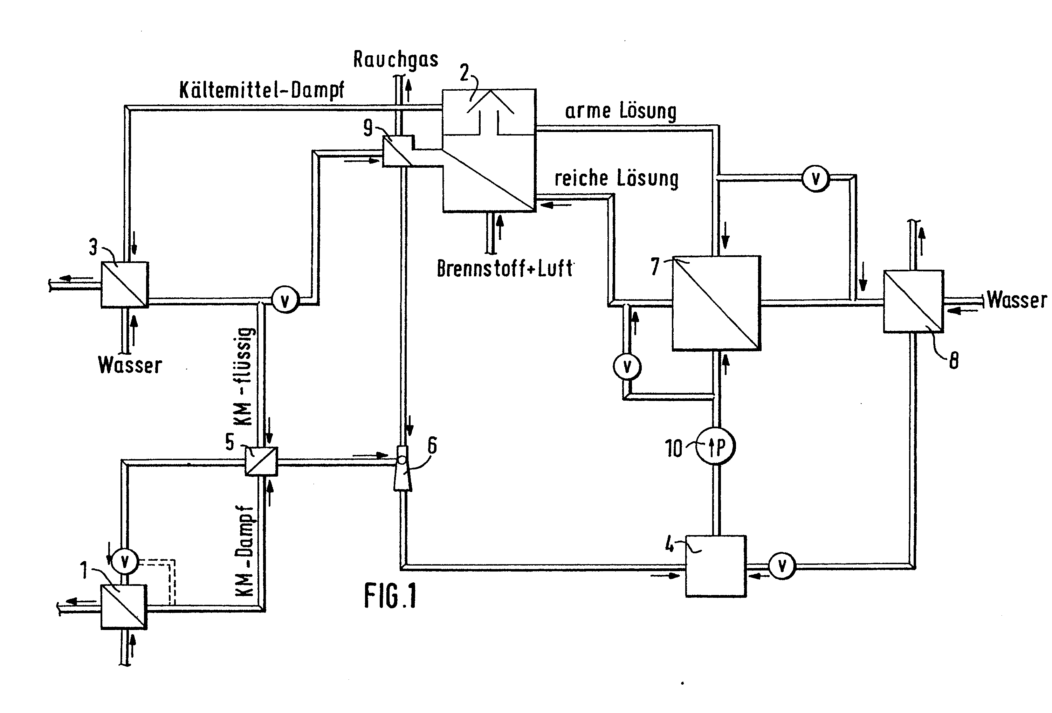

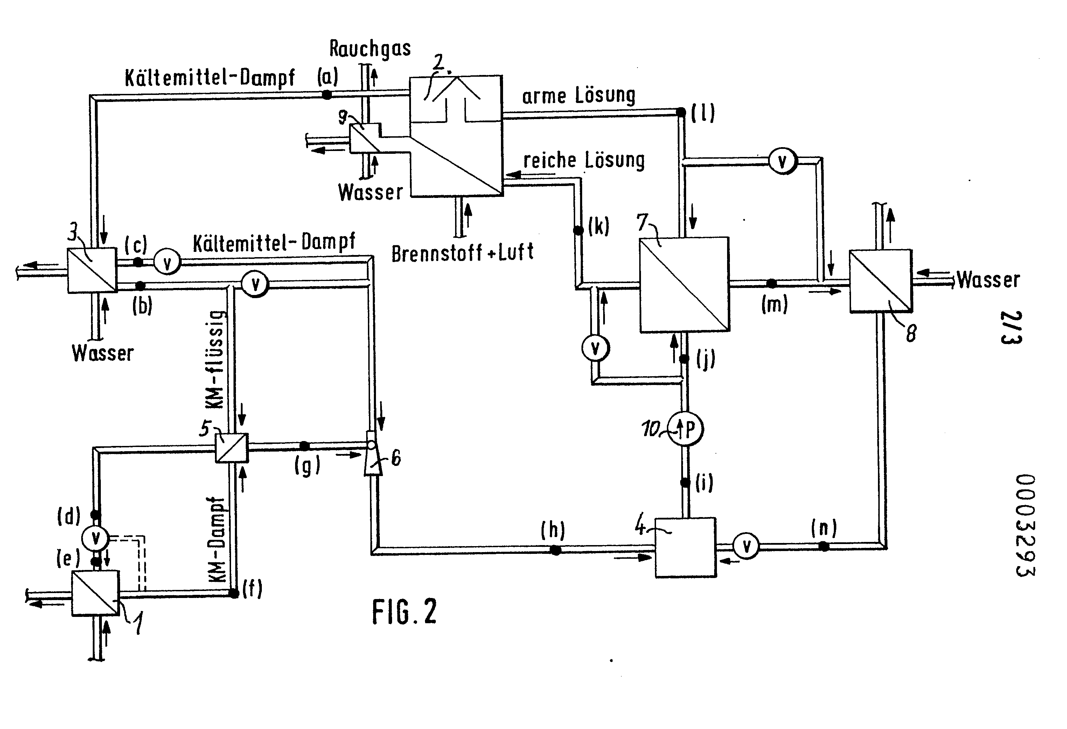

Das Verfahren wird anhand der Figuren 1 und 2 näher erläutert. Es zeigen:

Fig. 1    eine Anlage schematisch,

Fig. 2    eine Alternativlösung zu Fig. 1 und

Fig. 3    ein Konzentration/Enthalpie-Diagramm.

Eine Absorptionswärmepumpenanlage, die nach dem erfindungsgemäßen Verfahren arbeitet, weist einen Verdampfer 1, einen Austreiber 2, einen Kondensator 3, einen Absorber 4, einen Wärmewechsler 5 im Kältemittelkreis, ein Verdichteraggregat 6, einen weiteren Wärmewechsler 7 im Lösungsmittelkreis, einen Hauptwärmetauscher 8, gegebenenfalls ein Aggregat 9 zur Rauchgaskühlung, eine Lösungsmittelpumpe 10, sowie verschiedene in den Figuren gezeigte Ventile in den dargestellten Verbindungsleitungen auf.

Der den Austreiber 2 verlassende Kältemitteldampf wird im Kondensator 3 durch Heizzwecken dienendes Wasser kondensiert und gegebenenfalls unterkühlt. Das Kältemittelkondensat tritt nach Verlassen des Kondensators 3 in den Wärmewechsler 5 ein, wärmt dort den aus dem Verdampfer 1 austretenden Kältemitteldampfstrom und gelangt in den Verdampfer 1, wo ihm aus der Umgebung Wärme zugeführt wird.

Verlässt das Kältemittel den Verdampfer 1 mit einem nur kleinen. Absorptionsdruck, beispielsweise kleiner als 4 bar, öffnet sich der dargestellte Kältemitteldampf-Bypass zwischen Kondensator 3 und Verdichteraggregat 6. Damit strömt Kältemitteldampf als Treibdampf durch das Verdichteraggregat 6 und das Kältemittel wird auf den erforderlichen Absorberdruck komprimiert.

Im Absorber 4 wird der Kältemitteldampf von der kältemittelarmen Lösung absorbiert, die sich dadurch fast bis zur Sättigung mit Kältemittel anreichert. Die angereicherte Lösung wird von der Lösungspumpe 10 durch den Wärmewechsler 7 zum Austreiber 2 geführt. Im Wärmewechsler 7 gibt die kältemittelarme Lösung Wärme an die kältemittelreiche Lösung ab.

Über den Hauptwärmetauscher 8 wird aus dem Strom der armen Lösung der größte Anteil der Heizwärme entzogen.

Der Konzeption des Anlagenschemas gemäß Figur 1 und 2 liegt die Überlegung zugrunde, daß die Anlage auch bei sehr tiefen Außentemperaturen vollständig die Beheizung des Gebäudes gewährleistet, obwohl aus thermodynamischen Gründen keine Wärme mehr gepumpt werden kann und die Anlage somit als reine Kesselheizung funktioniert. Mit steigender Außentemperatur nimmt dann der über den Verdampfer 1 hereingeführte, gepumpte Wärmestrom ständig zu und sollte im Mittel bis zu 30 % des Wärmestroms betragen, der dem Austreiber bzw. Kocher 2 zugeführt wird. Ferner sollte die Anlagenschaltung möglichst unkompliziert sein.

Beheizt wird der Austreiber 2 durch eine Feuerung. Die höchste Austreibertemperatur wird nicht durch die Wärmequelle (z.B. Umgebungsluft) sondern durch die chemische Stabilität und Korrosivität des Arbeitsgemischs, z.B. Difluormonochlormethan/Tetraäthylenglycoldimethyläther begrenzt.

Damit die Anlage bei Außentemperaturen von etwa $-2^{o}C$· ohne Änderung des Lösungsmittelumlaufs und ohne Erhöhung der Austreibertemperatur den Heizwärmebedarf decken kann, liegt zwischen dem Kondensator 3 und Absorber 4 der Bypass zum Wärmewechsler 5 und damit auch zum Verdampfer 1. Der Bypass besteht (vgl. Fig. 2) aus einer Dampf- und einer Flüssigkeitsleitung und einem Verdichteraggregat 6. Vorzugsweise wird als Verdichteraggregat ein Strahlapparat eingesetzt. Die Dampfleitung beginnt bei einer vorzuwählenden niedrigen Außentemperatur sich mit deren weiterem Absinken zu öffnen. Der Kältemitteldampf strömt dann mit hohem Druck in das Verdichteraggregat 6 und komprimiert den durch den Verdampfer 1 fliessenden Kältemittelstrom vom Druck $p_o$ auf einen höheren Druck $p_i$, so daß im Absorber 4 auch bei diesen Temperaturen noch Kältemittel absorbiert wird, das Wärme aus der Umgebung aufgenommen hat, d.h., durch diese Schaltung wird die Temperaturgrenze unterhalb der die Anlage als Kesselheizung funktioniert, zu tieferen Temperaturen verschoben. Ohne diese Maßnahme würde bei gleichbleibendem Kesselheizwärmestrom die Temperatur des Austreibers 2 steigen und die thermische Belastung des Gemisches in Bereiche kommen, in denen seine Stabilität und Korrosivität nicht untersucht und damit nicht gewährleistet ist. Wenn die untere Grenze des Drucks des Absorbers 4 durch Öffnen der Dampfleitung nicht mehr erreicht werden kann, wird der Flüssigkeits-Bypass geöffnet und die Anlage funktioniert dann als Kesselheizung. Dabei werden auch die Umgehungen des Wärmewechslers 7 geöffnet, wodurch die Austreiberleistung praktisch direkt auf den Hauptwärmetauscher übertragen wird.

Die Abkühlung des kältemittelarmen Lösungsmittelstroms in dem Hauptwärmetauscher 8, der vor dem Absorber 4 liegt, erbringt noch eine weitere Verbesserung der Schaltung. Durch diese Maßnahme vereinfacht sich die Konstruktion des Absorbers 4, und der Absorptionswiderstand Kältemitteldampf/Lösung wird kleiner. Es ist vorgesehen, über den Hauptwärmetauscher 8 so viel Wärme abzuführen, daß der Absorber 4 adiabatisch betrieben wird. Die Wärmeabfuhr in dem vorgeschalteten Hauptwärmetauscher 8 ist neben den anderen sich durch die Schaltung ergebenden Vorteilen apparatetechnisch einfacher und thermodynamisch besser durchzuführen, als im Absorber 4.

Nach dem erfindungsgemäßen Verfahren kann bei einem außentemperaturabhängigen, nicht ausreichenden Verdampferdruck der Kältemittelkreislauf abgeschaltet und der Lösungsmittelkreislauf als Wärmeträgeranlage genutzt werden. Vorzugsweise wird im Wärmeträgeranlagenbetrieb der Wärmewechsler 7 umgangen und die Wärme ausschließlich über den Hauptwärmetauscher 8 abgegeben. Im Falle der Beheizung des Austreibers 2 mit Öl, Gas oder festen Brennstoffen können die Rauchgase in einem dem Austreiber 2 nachgeschalteten Aggregat 9 mit einem zu erwärmenden Medium gekühlt werden. Das Rauchgas kann zur Verdampfung eines Stromes von flüssigem Kältemittel verwendet werden, wie in Figur 1 gezeigt ist. Das dampfförmige Kältemittel kann als Treibdampfstrom in dem Verdichteraggregat 6 genutzt werden. Eine Alternative dazu stellt Figur 2 dar, in der die noch nutzbare Wärme der vom Austreiber kommenden Rauchgase direkt an Wasser überführt wird. Die Zeichen (a) bis (n) in Figur 2 kennzeichnen die Bilanzpunkte für die Berechnungen in dem nachfolgenden Beispiel.

In dem Ausführungsbeispiel wird das erfindungsgemäße Verfahren näher erläutert:

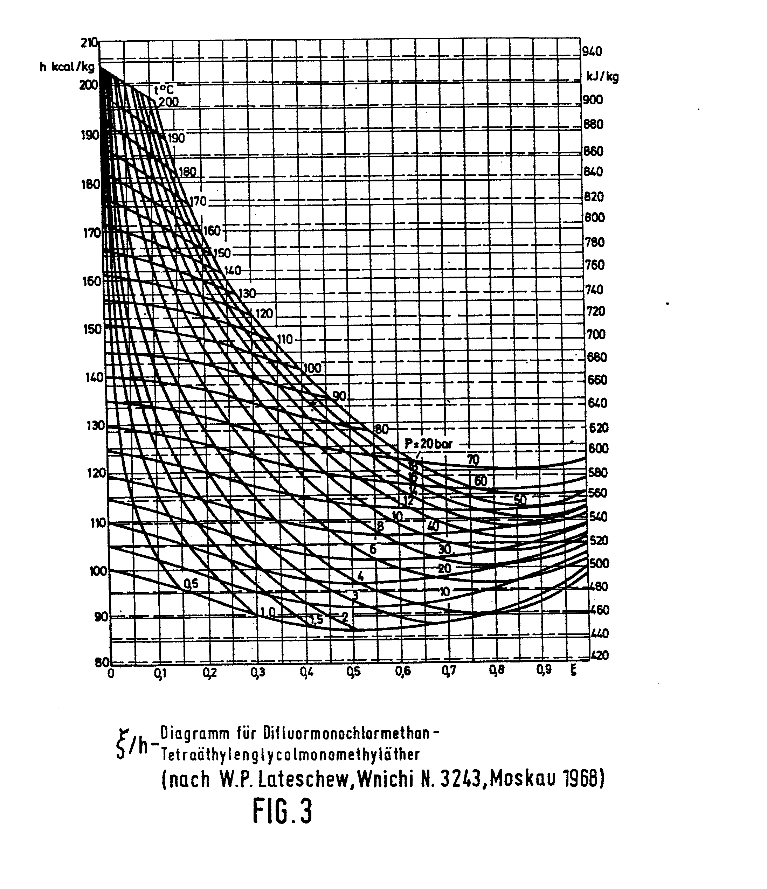

In den zehn Kreislauf-Apparaten der Anlage wird der Zustand der Stoffströme durch Druckänderung, Wärmezu- bzw. -abfuhr oder Zufuhr von Pumpenenergie geändert. Aus den Zuständen der zuströmenden Stoffströme und den vorgegebenen Zustandsänderungen in den Apparaten lassen sich die Zustände aller Stoffströme nach dem in der Figur 3 dargestellten Konzentration/Enthalpie-Diagramm für Difluormonochlormethan/Dimethyläther des Tetraäthylenglycols nach W.P. Lateschew, Wnichi Nr. 3243, Moskau 1968 berechnen. Die Berechnungsgleichungen sind in der nachfolgenden Tabelle 1 zusammengestellt. Die Reihenfolge der Gleichungen in Tabelle 1 entspricht der Reihenfolge, in der die Apparate von dem Kältemittel bzw. Kältemittel/Lösungsmittel-Gemisch durchströmt werden.

**Tabelle 1 :** (die im folgenden verwendeten Indices 1....14 beziehen sich auf die Bilanzpunkte (a)...(n) 0003293

**Kondensator (reines Kältemittel):**

$$\dot{Q}_K/\dot{m}_1 = h_1 - h_2 \cdot \dot{m}_2/\dot{m}_{KM} - h_3 \cdot \dot{m}_3/\dot{m}_{KM}$$

$$\dot{m}_1 = \dot{m}_2 + \dot{m}_3$$

$$p_1 \approx p_2 \approx p_3$$

$$\Delta T_2 = T_2 - T_{R\ddot{u}cklauf} = 10K$$

$$(T_{Vorlauf} - T_{R\ddot{u}cklauf} = 10K)$$

**Wärmewechsler I (reines Kältemittel):**

$$h_2 - h_4 = h_6 - h_7$$

$$\dot{m}_2 = \dot{m}_4 = \dot{m}_6 = \dot{m}_7$$

$$p_2 \approx p_4 ; \quad p_6 \approx p_7$$

$$\Delta T_7 = T_2 - T_7 = 5K$$

**Drossel (reines Kältemittel):**

$$h_5 = h_4$$

$$p_5 = p_s (T_0) < p_4$$

**Verdampfer (reines Kältemittel):**

$$\dot{Q}_0/\dot{m}_5 = h_6 - h_5$$

$$\dot{m}_6 = \dot{m}_5$$

$$p_6 \approx p_5 = p_s (T_0)$$

$$\Delta T_6 = T_{Umgebung} - T_0 = 8K$$

**Strahlapparat (reines Kältemittel):** 0003293

$$\dot{m}_8 \cdot h_8 = \dot{m}_7 \cdot h_7 + \dot{m}_3 \cdot h_3$$

$$\dot{m}_8 = \dot{m}_7 + \dot{m}_3 = \dot{m}_1 = \dot{m}_2 + \dot{m}_3$$

$$p_7 < p_8 < p_3$$

$$\zeta_{str} = (\dot{m}_3/\dot{m}_7)_{th} \, / \, (\dot{m}_3/\dot{m}_7) = 0{,}08$$

$$\eta_{str} = \frac{h_{8,th} - h_7}{h_3 - h_{8,th}} \cdot \frac{h_3 - h_8}{h_8 - h_7}$$

$$\dot{m}_8 \cdot s_{8,th} = \dot{m}_7 \cdot s_7 + \dot{m}_3 \cdot s_3$$

$$p_8 = p \, (h_{8,th}, \, s_{8,th})$$

$$T_8 = T \, (p_8, \, h_8)$$

**Absorber (Lösung + reines Kältemitttel):**

$$\dot{m}_9 \cdot h_9 = \dot{m}_8 \cdot h_8 + \dot{m}_{14} \cdot h_{14}$$

$$\dot{m}_9 = \dot{m}_8 + \dot{m}_{14}$$

$$\Delta \xi = \xi_9 - \xi_{14} = \dot{m}_8/\dot{m}_9$$

$$p_9 < p_8$$

$$T_9 < T \, (\xi_9, \, p_9)$$

**Pumpe (Lösung):**

$$L = \dot{m}_{10} \cdot (p_{10} - p_9) \, / \, (\varsigma \cdot \eta)$$

$$\dot{m}_{10} = \dot{m}_9$$

$$\eta = 0{,}7$$

$$\xi_{10} = \xi_9$$

$$h_{10} = h_9 + (p_{10} - p_9) \, / \, (\varsigma \cdot \eta)$$

$$T_{10} = T \, (h_{10}, \, \xi_{10})$$

## Wärmewechsler II:

$$\dot{m}_{11}\, h_1 - \dot{m}_{10}\, h_{10} = \dot{m}_{12}\, h_{12} - \dot{m}_{13}\, h_{13}$$

$$\dot{m}_{11} = \dot{m}_{10}$$

$$\dot{m}_{13} = \dot{m}_{12}$$

$$P_{11} \approx P_{10} \approx P_{12} \approx P_{13}$$

$$\Delta T = T_{13} - T_{10} = 10K$$

## Austreiber (Lösung + reines Kältemittel):

$$\dot{Q}_H = \dot{m}_{12}\, h_{12} + \dot{m}_1 \cdot h_1 - \dot{m}_{11} \cdot h_{11}$$

$$\dot{m}_{11} = \dot{m}_{12} + \dot{m}_1$$

$$\Delta \xi = \xi_{11} - \xi_{12} = \dot{m}_1 / \dot{m}_{11}$$

$$P_1 = P_{12} \approx P_{11}$$

$$T_1 = T_{12} \approx T\,(\xi_{12},\, P_{12})$$

## Wärmetauscher (Lösung):

$$\dot{Q}_a = \dot{m}_{13} \cdot h_{13} - \dot{m}_{14} \cdot h_{14}$$

$$\Delta T = T_{14} - T_{Rücklauf} = 5K$$

In Tabelle 1 bedeuten die Symbole:

| Symbol | Bedeutung | Einheit |
|---|---|---|
| $h$ | Enthalpie | kJ/kg |
| $L^{\cdot}$ | Pumpenleistung | kW |
| $\dot{m}$ | Massenstrom | kg/h |
| $p$ | Druck | bar |
| $\dot{Q}$ | Wärmestrom | kW |
| $r$ | Verdampfungswärme | kJ/kg |
| $T$ | Temperatur | K |
| $t$ | Temperatur | $^{\circ}$C |
| $\triangle$ | Differenz | – |
| $\eta$ | Wirkungsgrad | – |
| $\xi$ | Lösungsverhältnis | – |
| $\varsigma$ | Dichte | kg/m$^3$ |

0003293

Durch die Spezifikation:

Heizungswasser

|  | Vorlauftemperatur | 55 $^\circ$C |
|---|---|---|
|  | Temperaturspreizung 15 K | |

Heizleistung                                    12 kW

Wärmequelle

a) Luft

Lufttemperatur    -2 $^\circ$C

b) Grundwasser          ⎫ entspricht
   Wassertemperatur 10 $^\circ$C ⎬ thermodynamisch
                          ⎪ einer Lufttem-
                          ⎭ peratur von 10 $^\circ$C

und das Arbeitsstoffpaar Difluormonochlormethan/
Tetraäthylenglycoldimethyläther sind die Prozeßparameter nur noch in engen Grenzen variierbar.

Betrachtungen für den Auslegungspunkt $t_o$ = -10$^\circ$C,
wobei $t_o$ Verdampfungstemperatur bedeutet.
Mit den in Tabelle 1 angenommenen Werten ergibt sich
die Kondensationstemperatur des Kältemittels Difluormonochlormethan zu 60$^\circ$C und der Kondensationsdruck
zu 24,2 bar.

Die Verdampfungstemperatur des Kältemittels Difluormonochlormethan wird ebenfalls durch obige Werte und
Tabelle 1 festgelegt. Das Kältemittel verdampft bei
-10$^\circ$C und 3,5 bar.

Zwischen Austreiber und Kondensator wird der Druckabfall zu etwa 0,8 bar abgeschätzt und damit als
Austreiberdruck 25 bar gewählt. Die 25-bar-Isobare
im h-$\xi$-Bild des Gemischs Difluormonochlormethan/
Dimethyläthertetraäthylenglycol (Figur 3) und die

176-$^{o}$C-Isotherme (die höchste bisher im Hinblick auf Stabilität und Korrosivität experimentell untersuchte Isotherme) schneiden sich bei der Gewichtskonzentration 0,2 Gew.-%. Damit liegt der Zustand der armen Lösung am Austreiberausgang mit 25 bar, 176$^{o}$C und einer Konzentration von 0,2 Gew.-% Difluormonochlormethan fest.

Im Absorber wird das Kältemittel Difluormonochlormethan in der armen Lösung ohne Wärmeabgabe absorbiert, dadurch steigen die Temperatur und die Difluormonochlormethan-Konzentration in der Lösung. Die Lösung verläßt den Absorber als kältemittelreiche Lösung. Ihr Zustandspunkt liegt auf der Mischungsgeraden Kältemitteldampf/arme Lösung unterhalb der Gleichgewichtslinie für den Absorberdruck, da aus Gründen des Stoffübergangs die Gleichgewichtslinie nicht erreicht werden kann und wegen des Betriebsverhaltens der Lösungsmittelpumpe nicht erreicht werden darf.

Die Lösung tritt mit 20 Gew.-% Kältemittel Difluormonochlormethan und 45$^{o}$C (Tabelle 1) in den Absorber ein. Die Konzentrationsdifferenz reiche/arme Lösung wird gewählt zu

$$\Delta \xi = 0,05.$$

Damit beträgt die Temperatur der reichen Lösung

$$t_9 \approx 50^{o}C$$

und muß der Absorberdruck $p_{abs}$ größer als 3,8 bar sein, um den Prozeß aufrechtzuerhalten.

Mit den gefundenen Prozeßparametern

$$t_1 \quad = \quad 176^{\circ}C$$
$$\xi_1 \quad = \quad 0,2 \text{ Gew.-\%}$$
$$t_{14} \quad = \quad 45^{\circ}C$$
$$t_9 \quad = \quad 50^{\circ}C$$
$$\Delta\xi \quad = \quad \xi_9 - \xi_1 = 0,05 \text{ Gew.-\%}$$

wird die Anlage thermodynamisch berechnet.

Die nachfolgenden Tabellen 2 und 3 fassen die der Apparatedimensionierung zugrundeliegenden Prozeßdaten für das gewählte Stoffpaar Difluormonochlormethan/ Tetraäthylenglycoldimethyläther zusammen.

t in °C; p in bar

| Verdampfer | | | | Wärmewechsler I | | | | | | | | Kondensator | | | | | | Absorber | | | | | |
| --- | --- | --- | --- | --- | --- | --- | --- | --- | --- | --- | --- | --- | --- | --- | --- | --- | --- | --- | --- | --- | --- | --- | --- |
| Kältemittel | | | | warme Seite | | | | kalte Seite | | | | Kältemittel | | | | | | | | | | | |
| Ein | | Aus | | Ein | | Aus | | Ein | | Aus | | Ein | | TD[1]-Aus | | SD[1]-Aus | | R 22[2] | | arme Lösung | | reiche Lösung | |
| t | p | t | p | t | p | t | p | t | p | t | p | t | p | t | p | t | p | t | p | t | p | t | p |
| -7,5 | 3,9 | -10 | 3,55 | 50 | 24 | 20 | 23,8 | -10 | 3,55 | 45 | 3,45 | 176 | 25 | 60 | 24 | 50 | 24 | 40 | 4,0 | 45 | 4,0 | 50 | 3,8 |
| 11,0 | 7,0 | +10 | 6,8 | 50 | 24 | 31 | 23,8 | 10 | 6,8 | 45 | 6,7 | 176 | 25 | - | - | 50 | 24 | 45 | 6,2 | 45 | 6,2 | 59 | 6,0 |

*)

| Lösungspumpe | | | | Wärmewechsler II | | | | | | | | Austreiber | | | | | | Rauchgasnachkühler | | | | Hauptwärmetauscher | | | |
| --- | --- | --- | --- | --- | --- | --- | --- | --- | --- | --- | --- | --- | --- | --- | --- | --- | --- | --- | --- | --- | --- | --- | --- | --- | --- |
| | | | | reiche Lösung | | | | arme Lösung | | | | | | | | | | Rauchgas | | | | arme Lösung | | | |
| Ein | | Aus | | Ein | | Aus | | Ein | | Aus | | reiche L. | | arme L. | | R 22 | | Ein | | Aus | | Ein | | Aus | |
| t | p | t | p | t | p | t | p | t | p | t | p | t | p | t | p | t | p | t | p | t | p | t | p | t | p |
| 50 | 3,8 | 51 | 26 | 51 | 26 | 152 | 25 | 176 | 25 | 65 | 24 | 152 | 25 | 176 | 25 | 176 | 25 | 200 | | 100 | | 65 | 24 | 45 | 23 |
| 59 | 6,0 | 60 | 26 | 60 | 26 | 157 | 25 | 176 | 25 | 65 | 24 | 157 | 25 | 176 | 25 | 176 | 25 | 200 | | 100 | | 65 | 24 | 45 | 23 |

*)

Tabelle 2: Temperaturen und Drücke bei den Verdampfungstemperaturen -10 und +10 °C

(Druckverluste für die Apparate geschätzt)

1) TD = Treibdampf
   SD = Saugdampf
2) R 22 = Difluormonochlormethan

| Betriebsbedingung Verdampfer | | Mengenströme $\dot{m}$ kg/h | | | | | Entga-sungs-breite $\Delta\xi$ % | Energieströme $\dot{Q}$ kW | | | | | | | | | | |
|---|---|---|---|---|---|---|---|---|---|---|---|---|---|---|---|---|---|---|
| | | | Strahlapparat | | | | | Lösungs-pumpe 1) | Kondensator | | | Austrei-ber theoret. | Bren-ner bei $\eta H$ = 0,88 | Rauch-gas-Nach-kühler 2) | Wärmewechsler | | Haupt-Wär-met. | Ver-dampfer |
| | | R 22 3) | Saug-Dampf | Treib-Dampf | arme Lösung | reiche Lösung | | | Über-hitzung | Kon-densa-tion | Unter-kühlung | | | | I | II | | |
| t °C | p bar | | | | | | | | | | | | | | | | | |
| - 10 | 3,55 | 40 | 22 | 18 | 753 | 793 | 0,05 | 0,46 | 1,22 | 0,86 | 0,08 | 10,26 | 11,65 | 0,61 | 0,23 | 41,9 | 9,84 | 1,08 |
| ± 0 | 4,98 | 49 | 49 | 0 | 646 | 695 | 0,07 | 0,41 | 1,49 | 1,90 | 0,18 | 9,06 | 10,30 | 0,47 | 0,43 | 35,9 | 8,43 | 2,36 |
| + 10 | 6,80 | 70 | 70 | 0 | 520 | 590 | 0,12 | 0,35 | 2,18 | 2,77 | 0,26 | 8,12 | 9,23 | 0,42 | 0,50 | 28,9 | 6,79 | 3,38 |

1) verlustfrei          2) Ölfeuerung          3) Difluormonochlormethan

Tabelle 3 : Mengen- und Energieströme über den Verdampfungs-
temperatur-Bereich -10 °C ... +10 °C

- 18 -

Mit den Energieströmen nach Tabelle 3 und unter
Zuhilfenahme von Schätzwerten für Energieverluste
(Kessel, Rauchgas, Pumpe) und dem Verdampfer-
Ventilatorantrieb wird die Energiebilanz für den
betrachteten Temperaturbereich aufgestellt.

Die nachfolgende Tabelle 4 zeigt die Energiebilanz
für die Absorptionswärmepumpenschaltung nach Figur
1 und 2.

Tabelle 4

| $t_o$ °C | Ein kW | | | Aus kW | | | Wärmever-hältnis |
|---|---|---|---|---|---|---|---|
| | Brenner | Pumpe [1] | Ventilator | Haupt-Wärme-tauscher | Kond. | RG-Kühler | |
| -10 | 11,65 | 0,66 | | 9,84 | 2,16 | 0,61 | 1,01 |
| ±0 | 10,30 | 0,58 | 0,15 pauschal | 8,43 | 3,57 | 0,47 | 1,13 |
| +10 | 9,23 | 0,50 | | 6,79 | 5,21 | 0,42 | 1,26. |

1) $\eta = 0,7$

- 1 -

## Patentansprüche

1. Verfahren zur Beheizung mit einer Absorptionswärmepumpenanlage, dadurch gekennzeichnet, daß der Absorberdruck mit Hilfe eines Verdichteraggregates von dem Verdampferdruck unabhängig gemacht wird und/ oder die zum Absorber rücklaufende arme Lösung in einem Hauptwärmetauscher auf tiefere Temperaturen als es in dem, zwischen dem Absorber und dem Austreiber liegenden, Wärmewechsler möglich ist, unterkühlt und der Absorber adiabatisch betrieben wird.

2. Verfahren nach Anspruch 1, dadurch gekennzeichnet, daß als Verdichteraggregat ein Strahlapparat verwendet wird.

3. Verfahren nach Anspruch 1 und 2, dadurch gekennzeichnet, daß bei einem außentemperaturabhängigen, nicht ausreichenden Verdampferdruck der Kältemittelkreislauf abgeschaltet und der Lösungskreislauf als Wärmeträgeranlage genutzt wird.

4. Verfahren nach Anspruch 1 bis 3, dadurch gekennzeichnet, daß im Wärmeträgeranlagenbetrieb der Wärmewechsler umgangen und die Wärme ausschließlich über den Hauptwärmetauscher abgegeben wird.

5. Verfahren nach Anspruch 1 bis 4, dadurch gekennzeichnet, daß im Falle der Beheizung des Austreibers mit Öl, Gas oder festen Brennstoffen die Rauchgase in einem dem Austreiber nachgeschalteten Aggregat mit einem zu erwärmenden Medium gekühlt werden.

0003293

6.    Verfahren nach Anspruch 1 bis 5, dadurch gekennzeichnet, daß das Rauchgas zur Verdampfung eines Stromes von flüssigem Kältemittel verwendet wird und daß das dampfförmige Kältemittel als Treibdampfstrom in dem Verdichteraggregat genutzt wird.

7.    Verfahren nach Anspruch 1 bis 6, dadurch gekennzeichnet, daß als Lösungspumpe eine Zahnradpumpe verwendet wird.

8.    Verfahren nach Anspruch 1 bis 7, dadurch gekennzeichnet, daß als adiabatischer Absorber ein Rohr mit Kältemitteleinspritzung und/oder statischen Mischern verwendet wird.

FIG.1

0003293

FIG. 2

Rauchgas

Kältemittel-Dampf (a)

2.

arme Lösung

(l)

9

reiche Lösung

Wasser

Brennstoff + Luft

3 (c)

Kältemittel-Dampf

7

(k)

(b)

(m)

Wasser

8

KM-flüssig

(j)

Wasser

5 KM-flüssig

(g) 6

10 P

(d)

(i)

KM-Dampf

(e)

(h) 4 (n)

(f)

1

2/3

0003293

ξ/h-Diagramm für Difluormonochlormethan-Tetraäthylenglycolmonomethyläther
(nach W.P. Lateschew, Wnichi N. 3243, Moskau 1968)

FIG. 3

Europäisches Patentamt

**EUROPÄISCHER RECHERCHENBERICHT**

Nummer der Anmeldung

EP 79 100 084.7

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 727 990 (ESSO) <br> * Seite 27, Absatz 1; Fig. 2, Position 21 und Seite 26, Absatz 1* <br><br> -- | 1,8 | F 24 D 11/02 <br> F 24 J 3/04 |
| | US - A - 4 037 649 (D.R. HARTKA) <br> * Fig. 1, Position 33; Fig. 1, Position 32 * <br><br> -- | 1,5 | |
| | CH - A - 415 703 (CARRIER) <br> * Seite 2, Zeilen 46 bis 52; Fig. 1, Position 20 * <br><br> -- - | 1,2 | **RECHERCHIERTE SACHGEBIETE (Int. Cl.²)** <br><br> F 24 D 11/02 <br> F 24 J 3/04 <br> F 25 B 15/00 <br> F 25 B 29/00 |
| | US - A - 3 041 853 (S. HARWICH) <br> * Fig. 1, Position 24 * <br><br> -- | 1 | |
| P | DE - A - 2 659 641 (C. SCHNEIDER) <br> * Fig. 1, Position 15 * <br><br> -- | 5 | |
| A | DE - A - 2 528 736 (H. HERRMANN) <br> * ganzes Dokument * <br><br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 19-04-1979 | PIEPER |

EPA form 1503.1 06.78